# EUROPÄISCHE PATENTSCHRIFT

(11) **EP 3 307 648 B1**
(45) Veröffentlichungstag und Bekanntmachung des Hinweises auf die Patenterteilung: **19.02.2020**
(21) Anmeldenummer: 16730764.4
(22) Anmeldetag: 09.06.2016
(51) Int. Cl.: B65D 85/804

(54) **PORTIONSKAPSEL, SYSTEM UND VERFAHREN ZUR HERSTELLUNG EINES GETRÄNKS**
CAPSULE, SYSTEM AND METHOD FOR PRODUCING BEVERAGES
CAPSULE, SISTEM ET METHODE POUR LA PRODUCTION DES BOISSONS

(30) Priorität: 09.06.2015 DE 102015210562
(43) Veröffentlichungstag der Anmeldung: 18.04.2018
(73) Patentinhaber: K-fee System GmbH, 51469 Bergisch Gladbach (DE)
(72) Erfinder: KRÜGER, Marc, 51467 Bergisch-Gladbach (DE); EMPL, Günter, 51429 Bergisch Gladbach (DE)
(86) Internationale Anmeldenummer: PCT/EP2016/063200
(87) Internationale Veröffentlichungsnummer: WO 2016/198543

(56) Entgegenhaltungen:
- WO-A1-2009/115475
- WO-A1-2014/128205
- WO-A1-2014/131779
- DE-A1-102011 010 534

## Beschreibung

### Stand der Technik

Die Erfindung geht aus von der Portionskapsel nach dem Oberbegriff des Anspruchs 1.

Es ist aus dem Stand der Technik hinlänglich bekannt, Getränke mittels solcher Portionskapseln in entsprechenden Getränkeherstellungsmaschinen zuzubereiten. Derartige Getränkeherstellungsmaschinen, auch als Portionskaffeemaschinen bezeichnet, sind beispielsweise aus den Druckschriften WO 2011 / 147 553 A1 oder WO 2011 / 147 491 A1 bekannt, während typische Portionskapseln beispielsweise aus den Druckschriften WO 2012 / 038 063 A1 und WO 2010 / 085 824 A1 WO2014131779 A1 bekannt sind.

Der Benutzer führt stets eine mit einem Getränkerohmaterial gefüllte Portionskapsel in die Getränkeherstellungsmaschine ein, schließt anschließend die Getränkeherstellungsmaschine und startet den Zubereitungsmechanismus. Beim Schließen der Getränkeherstellungsmaschine wird die Portionskapsel an wenigstens zwei Stellen perforiert, wobei durch eine der beiden Perforationsöffnungen heißes Wasser unter Druck in das Innere der Portionskapsel eingeleitet wird und durch Wechselwirkung des heißen Wassers mit dem Getränkerohmaterial das Getränk erzeugt wird, welches durch die andere der beiden Perforationsöffnungen aus der Portionskapsel abfließt und in ein entsprechendes Trinkgefäß geleitet wird. Ein Nachteil dieser Portionskapseln ist, dass der Kapselboden üblicherweise relativ dick und stabil ausgebildet ist, so dass das Perforationsmittel zur Perforation des Kapselbodens einem hohen Verschließ ausgesetzt ist. Zudem öffnet sich der Kapselboden hierbei lediglich geringfügig, so dass das Getränk durch einen sehr schmalen Spalt zwischen der Perforationswandung und dem Perforationsmittel austritt. Solche Getränkeherstellungsmaschinen sind aber vornehmlich zur Herstellung von Kaffee gedacht. Aus diesem Grund wird das heiße Wasser üblicherweise unter hohem Druck von bis zu 19 bar in die Portionskapsel eingeleitet. Durch den plötzlichen Druckverlust beim Austreten des Getränks aus der Portionskapsel durch den schmalen Spalt wird das Getränk beim Verlassen der Portionskapsel sehr stark beschleunigt. Dies gilt umso mehr, wenn Portionskapseln ohne inneres Filterelements verwendet werden, die den Getränkestrom zusätzlich abbremsen. Die hohe Geschwindigkeit der austretenden Getränkeflüssigkeit führt nachteiligerweise dazu, dass Getränkeflüssigkeit verspritzt wird, wodurch eine erhebliche Verbrühungsgefahr für den Benutzer der Getränkeherstellungsmaschine besteht, sowie die Umgebung der Getränkeherstellungsmaschine verschmutzt wird

### Offenbarung der Erfindung

Es ist daher die Aufgabe der vorliegenden Erfindung eine einfach herstellbare und kostengünstige Portionskapsel ohne Filterelement für eine Getränkeherstellungsmaschine zur Verfügung zu stellen, mit welcher einerseits der erhöhte Verschleiß am Perforationsmittel ausgeräumt werden kann und welche andererseits auch die Erzeugung von Getränken erlaubt, ohne dass für den Benutzer die Gefahr von Verbrühungen oder Verunreinigungen besteht.

Die Aufgabe der vorliegenden Erfindung wird gelöst durch eine Portionskapsel zur Herstellung eines Getränks aufweisend einen im Wesentlichen kegelstumpfförmigen oder zylindrischen Kapselgrundkörper, welcher einen Hohlraum zur Aufnahme eines Getränkerohmaterials aufweist, und eine den Hohlraum verschließende Membran, wobei der Kapselgrundkörper einen Kapselboden aufweist, wobei der Kapselboden eine Ausgangsöffnung aufweist, welche mit einer durchstechbaren Folie abgedichtet ist, wobei die Portionskapsel filterfrei ausgebildet ist, und wobei die Folie eine Zugfestigkeit kleiner als 80 N/mm² aufweist.

Die erfindungsgemäße Portionskapsel hat gegenüber dem Stand der Technik den Vorteil, dass an der Stelle im Kapselboden, an welcher die Portionskapsel vom Perforationsmittel der Getränkeherstellungsmaschine üblicherweise perforiert wird, bereits eine vorgefertigte Ausgangsöffnung vorhanden ist, welche nur von einer Folie verschlossen ist, wobei die Folie eine vergleichsweise geringe Zugfestigkeit aufweist. Durch die Verwendung einer Folie mit einer derart geringen Zugfestigkeit bildet sich beim Perforieren derselben eine vergleichsweise große Öffnung in der Folie, so dass der Druckverlust im Bereich der Ablauföffnung geringer ausfällt und das Getränk die Portionskapsel mit niedrigerer Geschwindigkeit verlässt. Die Gefahr von Verbrühungen des Benutzers oder Verunreinigungen der Umgebung kann somit vorteilhafterweise ausgeräumt werden. Es hat sich gezeigt, dass beim Perforieren der Folie in einer üblichen Getränkeherstellungsmaschine ab einer Zugfestigkeit kleiner als 80 N/mm² eine vergleichsweise große Öffnung in der Folie ausgebildet wird, welche zu einer deutlichen Verlangsamung des Getränkestromes aus der Portionskapsel führt. Das Getränkerohmaterial umfasst insbesondere auflösbares Instantpulver bzw. -granulat, wie beispielsweise Kaffeepulver, Schokoladenpulver, Milchpulver, Tee, Suppenpulver oder dergleichen.

Vorteilhafte Ausgestaltungen und Weiterbildungen der Erfindung sind den Unteransprüchen, sowie der Beschreibung unter Bezugnahme auf die Zeichnungen entnehmbar.

Gemäß einer bevorzugt Ausführungsform der vorliegenden Erfindung ist vorgesehen, dass die Folie eine Zugfestigkeit kleiner als 75 N/mm² und bevorzugt kleiner als 70 N/mm² aufweist. Bevorzugt weist die Folie eine Zugfestigkeit zwischen 20 und 70 N/mm² auf. Es hat sich gezeigt, dass gerade in diesem Bereich ein einfaches Aufstechen ohne übermäßige Abnutzung der Perforationsmittel erzielt werden kann, wobei sich gleichzeitig eine große Ablauföffnung bildet.

Erfindungsgemäss, die Folie zudem derart ausgebildet ist, dass sie eine Dehnung zwischen 1 und 30 Prozent bevorzugt zwischen 2 und 20 Prozent und besonders bevorzugt zwischen 5 und 15 Prozent umfasst. Eine vergleichsweise geringe Dehnbarkeit der Folie führt vorteilhafterweise dazu, dass die Folie zuverlässig und relativ zügig beim Schließen der Brühkammer perforiert wird.

Gemäß einer weiteren bevorzugt Ausführungsform der vorliegenden Erfindung ist vorgesehen, dass die Folie eine Verbundfolie aus Aluminium und Kunststoff umfasst, insbesondere eine PET/Aluminium/PP95-Verbundfolie oder eine PET/Aluminium/PP100-Verbundfolie. Die Folie weist insbesondere eine Materialstärke zwischen 10 und 100 Mikrometer, bevorzugt zwischen 20 und 70 Mikrometer und besonders bevorzugt zwischen 40 und 60 Mikrometer auf.

Gemäß einer weiteren bevorzugt Ausführungsform der vorliegenden Erfindung ist vorgesehen, dass die Ausgangsöffnung im Wesentlichen kreisrund ausgebildet ist und der Durchmesser der Ausgangsöffnung zwischen 10 und 60 Prozent, bevorzugt zwischen 20 und 50 Prozent und besonders bevorzugt zwischen 30 bis 40 Prozent des Durchmessers des Kapselbodens beträgt. Denkbar ist, dass die Ausgangsöffnung im Wesentlichen kreisrund ausgebildet ist und einen Durchmesser größer als 8 Millimeter und bevorzugt größer als 10 Millimeter aufweist.

Insbesondere ist der Durchmesser der Ausgangsöffnung kleiner als 20 Millimeter und bevorzugt kleiner als 14 Millimeter. Der Durchmesser des Kapselbodens umfasst insbesondere 25 bis 35 Millimeter, bevorzugt 28 bis 32 Millimeter und besonders bevorzugt im Wesentlichen 30 Millimeter.

Die erfindungsgemäße Portionskapsel ist filterlos ausgebildet, d.h. dass das Getränkerohmaterial insbesondere unmittelbar auf dem Kapselboden aufliegt und kein beispielsweise siebförmiges oder papierförmiges Filterelement zum Zurückhalten von Getränkegranulat zwischen dem Getränkerohmaterial und dem Kapselboden angeordnet ist.

Ein weiterer Gegenstand der vorliegenden Erfindung ist ein System aufweisend eine Getränkeherstellungsmaschine und die erfindungsgemäße Portionskapsel, wobei die Getränkeherstellungsmaschine ein erstes und ein zweites Brühkammerelement aufweist, wobei das erste und/oder das zweite Brühkammerelement zwischen einer Ladestellung, in welcher das erste und das zweite Brühkammerelement zum Einbringen der Portionskapsel in die Getränkeherstellungsmaschine voneinander beabstandet sind, und einer Arbeitsstellung, in welcher das erste und das zweite Brühkammerelement zur Bildung einer im Wesentlichen geschlossenen Brühkammer einander angenähert sind, bewegbar ist, wobei das zweite Brühkammerelement ein in Richtung des ersten Brühkammerelements abstehendes Perforationsmittel aufweist, welches beim Überführen der Getränkeherstellungsmaschine von der Ladestellung in die Arbeitsstellung die Folie am Kapselboden zur Erzeugung eines Getränkeauslaufs durchsticht.

Vorzugsweise unterliegt das Perforationsmittel bei dem erfindungsgemäßen System einem deutlich reduzierten Verschleiß, da das Perforationsmittel nicht den stabilen Boden des Kapselgrundkörpers durchsticht, sondern lediglich die deutlich dünnere Folie.

Gemäß einer weiteren bevorzugt Ausführungsform der vorliegenden Erfindung ist vorgesehen, dass das erste Brühkammerelement eine Mehrzahl von in Richtung des zweiten Brühkammerelements abstehende weitere Perforationsmittel aufweist, welche beim Überführen der Getränkeherstellungsmaschine von der Ladestellung in die Arbeitsstellung die Membran zur Bildung von Einlassöffnungen durchstechen.

Ein weiterer Gegenstand der vorliegenden Erfindung ist Verfahren zur Herstellung eines Getränks mit dem erfindungsgemäßen System, wobei in einem ersten Verfahrensschritt die Getränkeherstellungsmaschine in der Ladestellung bereitgestellt wird, wobei in einem zweiten Verfahrensschritt die Portionskapsel der Getränkeherstellungsmaschine zugeführt wird, wobei in einem dritten Verfahrensschritt die Getränkeherstellungsmaschine von der Ladestellung in die Arbeitsstellung überführt wird, wodurch das Perforationsmittel die Folie durchsticht und der Kapselboden perforiert wird, und wobei in einem vierten Verfahrensschritt der Portionskapsel Brühwasser zwangszugeführt wird.

Die Zugfestigkeit und/oder die Dehnung der Folie wird insbesondere in einem Zugversuch, welcher beispielsweise auf einer Universalprüfmaschine durchgeführt wird, bestimmt, welches ein genormtes Standardverfahren der Werkstoffprüfung ist. Die Folie wird dabei beispielsweise in die Universalprüfmaschine eingespannt und so lange einer steigenden Zugbelastung ausgesetzt, bis die Folie schließlich zerreißt. Während des Versuchs wird ein Kraft-Weg-Diagramm oder ein Spannungs-Dehnungs-Diagramm aufgezeichnet, sowie kontinuierlich der Querschnitt und die Länge der Folie gemessen. Aus den aufgezeichneten Daten werden die Zugfestigkeit und die Dehnung unmittelbar abgelesen oder berechnet. Die Universalzugmaschine umfasst beispielsweise eine "Quasar 200" der Firma "Schütz und Licht", während die Daten mit der Prüfsoftware "Graphwork" des gleichnamigen Herstellers ausgewertet werden.

### Kurze Beschreibung der Zeichnungen

- Figur 1: zeigt eine schematische Schnittbildansicht einer Portionskapsel gemäß einer beispielhaften Ausführungsform der vorliegenden Erfindung.
- Figuren 2a, 2b: zeigen schematische Ansichten eines Systems und eines Verfahrens zur Herstellung eines Getränks gemäß einer beispielhaften Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

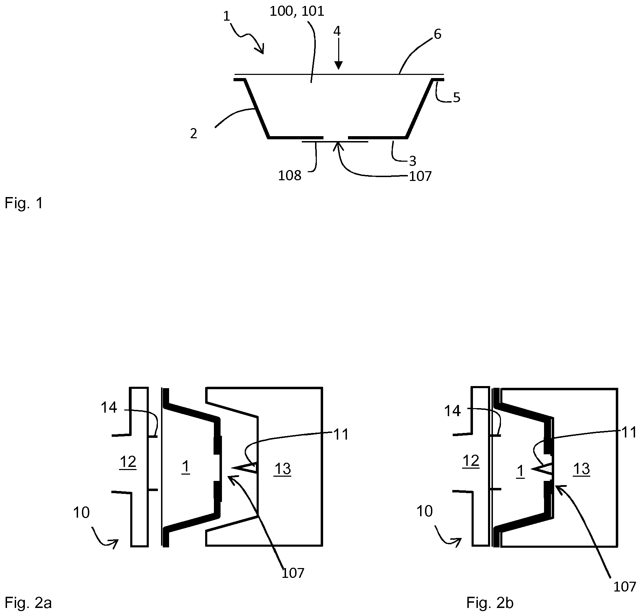

In **Figur 1** ist eine schematische Schnittbildansicht einer Portionskapsel 1 gemäß einer beispielhaften Ausführungsform der vorliegenden Erfindung dargestellt.

Die Portionskapsel 1 weist dabei einen im Wesentlichen starren oder halbstarren kegelstumpfförmigen Kapselgrundkörper 2 mit einem Kapselboden 3 und einer Einfüllöffnung 4 auf. Im Bereich der Einfüllöffnung 4 schließt die umlaufende Seitenwandung des Kapselgrundkörpers 2 mit einem umlaufenden Flansch 5 ab. Die Einfüllöffnung 4 dient zum Befüllen eines Hohlraumes 100 im Inneren der Portionskapsel 1 mit einem Getränkerohmaterial 101. Der Hohlraum 100 wird sodann mit einer Membran 6 luftdicht verschlossen, wobei der Rand der Membran 6 auf den Flansch 5 gesiegelt ist. Das Getränkerohmaterial 101 umfasst insbesondere auflösbares Instantpulver bzw. -granulat, wie beispielsweise Kaffeepulver, Schokoladenpulver, Milchpulver, Tee, Suppenpulver oder dergleichen.

Der Kapselboden 3 weist eine zentrale Ausgangsöffnung 107 auf, welche durch eine luftdichte Folie 108 verschlossen ist. Die Folie 108 ist auf die Außen- bzw. Unterseite des Kapselbodens 3 aufgeklebt und von einem Perforationsmittel (nicht dargestellt) einer Getränkeherstellungsmaschine 10 perforierbar. Die zentrale Ausgangsöffnung ist insbesondere kreisrund mit einem Durchmesser zwischen 8 und 14 Millimetern ausgebildet. Der Kapselboden 3 umfasst vorzugsweise einen Durchmesser von im Wesentlichen 30 Millimeter.

Die Folie 108 ist dabei derart beschaffen, dass sie eine Zugfestigkeit zwischen 20 und 70 N/mm² und eine Dehnung zwischen 5 und 15 Prozent aufweist. Hierdurch wird einerseits ein leichtes Durchstechen der Folie 108 durch ein Perforationsmittel 11 einer Getränkeherstellungsmaschine 10 (Vgl. Figuren 2a und 2b) ermöglicht und andererseits beim Perforieren ein vergleichsweise großer Getränkeauslasses im Kapselboden 3 erzeugt, so dass die Austrittsgeschwindigkeit des Getränks reduziert wird. Die Zugfestigkeit und die Dehnung der Folie 108 können werden insbesondere mit einer Universalzugmaschine wie beispielsweise der "Quasar 200" der Firma "Schütz und Licht", sowie einer Prüfsoftware "Graphwork" des gleichnamigen Herstellers bestimmt. Die Folie 108 umfasst ferner eine PET/Aluminium/PP95- oder eine PET/Aluminium/PP100-Verbundfolie mit einer Materialstärke zwischen 40 und 60 Mikrometern.

Die Portionskapsel 1 ist ferner filterlos ausgebildet, d.h. dass das Getränkerohmaterial 101 liegt unmittelbar auf der Innen- bzw. Oberseite des Kapselbodens 3 auf.

In **Figuren 2a, 2b** sind schematische Ansichten eines Systems und eines Verfahrens zur Herstellung eines Getränks gemäß einer beispielhaften Ausführungsform der vorliegenden Erfindung. Das System weist die anhand von Figur 1 bereits beschriebene Portionskapsel 1, sowie eine Getränkeherstellungsmaschine 10.

Die Getränkeherstellungsmaschine 10 umfasst im vorliegenden Beispiel ein ersten Brühkammerelement 12 und ein zweites Brühkammerelement 13. Das erste Brühkammerelement 12 ist relativ zum zweiten Brühkammerelement 13 zwischen einer in Figur 2a illustrierten Ladestellung und einer in Figur 2b illustrierten Arbeitsstellung verschiebbar. In der Ladestellung ist das erste Brühkammerelement 12 vom zweiten Brühkammerelement 13 beanstandet, so dass die Portionskapsel 1 in die Getränkeherstellungsmaschine 10 und zwischen das erste und zweite Brühkammerelement 12, 13 einführbar ist, beispielsweise von oben unter Ausnutzung der Gravitationskraft. Anschließend wird das erste Brühkammerelement 12 in Richtung des zweiten Brühkammerelements 13 verschoben, bis das erste und zweite Brühkammerelement 12, 13 gemeinsam eine geschlossene Brühkammer bilden, in welcher die Portionskapsel 1 angeordnet ist.

Das zweite Brühkammerelement 13 ist mit einem zentralen Perforationsmittel 11 versehen, während das erste Brühkammerelement 12 eine Mehrzahl von weiteren Perforationsmitteln 14 aufweist. Beim Schließen der Brühkammer durchstechen die weiteren Perforationsmittel 14 die Membran 6 der Portionskapsel 1, um Eintrittsöffnungen zum Einleiten von Brühwasser in die Portionskapsel 1 zu erzeugen. Gleichzeitig perforiert das zentrale Perforationsmittel 11 am zweiten Brühkammerelement 13 die Dichtfolie 108 am Kapselboden 3 und zwar genau im Bereich der Austrittsöffnung 107. Optional schiebt sich das Perforationsmittel 11 dabei in die Austrittsöffnung 107. Im Kapselboden 3 wird durch Perforation der Folie 108 ein Getränkeauslass gebildet, durch welchen das in der Portionskapsel 1 durch Wechselwirkung zwischen dem Brühwasser und dem Getränkerohmaterial erzeugte Getränk aus der Portionskapsel 1 fließen kann.

## Patentansprüche

1. Portionskapsel (1) zur Herstellung eines Getränks aufweisend einen im Wesentlichen kegelstumpfförmigen oder zylindrischen Kapselgrundkörper (2), welcher einen Hohlraum (100) zur Aufnahme eines Getränkerohmaterials (101) aufweist, und eine den Hohlraum (100) verschließende Membran (6), wobei der Kapselgrundkörper (2) einen Kapselboden (3) aufweist, wobei der Kapselboden (3) eine Ausgangsöffnung (107) aufweist, welche mit einer durchstechbaren Folie (108) abgedichtet ist, und wobei die Portionskapsel (1) filterfrei ausgebildet ist, **dadurch gekennzeichnet, dass** die Folie (108) eine Zugfestigkeit kleiner als 80 N/mm² aufweist und eine Dehnung zwischen 1 und 30 Prozent umfasst.

2. Portionskapsel (1) nach Anspruch 1, wobei die Folie (108) eine Zugfestigkeit kleiner als 75 N/mm² und bevorzugt kleiner als 70 N/mm² aufweist.

3. Portionskapsel (1) nach einem der vorhergehenden Ansprüche, wobei die Folie (108) eine Zugfestigkeit zwischen 20 und 70 N/mm² umfasst.

4. Portionskapsel (1) nach einem der vorhergehenden Ansprüche, wobei die Folie (108) eine Dehnung zwischen 2 und 20 Prozent und bevorzugt zwischen 5 und 15 Prozent umfasst.

5. Portionskapsel (1) nach einem der vorhergehenden Ansprüche, wobei die Folie (108) eine Materialstärke zwischen 10 und 100 Mikrometer, bevorzugt zwischen 20 und 70 Mikrometer und besonders bevorzugt zwischen 40 und 60 Mikrometer aufweist.

6. Portionskapsel (1) nach einem der vorhergehenden Ansprüche, wobei die Folie (108) eine Verbundfolie aus Aluminium und Kunststoff umfasst, insbesondere eine PET/Aluminium/PP95-Verbundfolie oder eine PET/Aluminium/PP100-Verbundfolie.

7. Portionskapsel (1) nach einem der vorhergehenden Ansprüche, wobei die Ausgangsöffnung (107) im Wesentlichen kreisrund ausgebildet ist und der Durchmesser der Ausgangsöffnung (107) zwischen 10 und 60 Prozent, bevorzugt zwischen 20 und 50 Prozent und besonders bevorzugt zwischen 30 bis 40 Prozent des Durchmessers des Kapselbodens (5) beträgt.

8. Portionskapsel (1) nach einem der vorhergehenden Ansprüche, wobei die Ausgangsöffnung (107) im Wesentlichen kreisrund ausgebildet ist und einen Durchmesser größer als 8 Millimeter und bevorzugt größer als 10 Millimeter aufweist.

9. Portionskapsel (1) nach Anspruch 8, wobei der Durchmesser der Ausgangsöffnung (107) kleiner als 20 Millimeter und bevorzugt kleiner als 14 Millimeter ist.

10. Portionskapsel (1) nach einem der vorhergehenden Ansprüche, wobei der Durchmesser des Kapselbodens (5) 25 bis 35 Millimeter, bevorzugt 28 bis 32 Millimeter und besonders bevorzugt im Wesentlichen 30 Millimeter umfasst.

11. Portionskapsel (1) nach einem der vorhergehenden Ansprüche, wobei das Getränkerohmaterial (101) unmittelbar auf dem Kapselboden (3) aufliegt.

12. System aufweisend eine Getränkeherstellungsmaschine (10) und eine Portionskapsel (1) nach einem der vorhergehenden Ansprüche, wobei die Getränkeherstellungsmaschine (10) ein erstes und ein zweites Brühkammerelement (12, 13) aufweist, wobei das erste und/oder das zweite Brühkammerelement (12, 13) zwischen einer Ladestellung, in welcher das erste und das zweite Brühkammerelement (12, 13) zum Einbringen der Portionskapsel (1) in die Getränkeherstellungsmaschine (10) voneinander beabstandet sind, und einer Arbeitsstellung, in welcher das erste und das zweite Brühkammerelement (12, 13) zur Bildung einer im Wesentlichen geschlossenen Brühkammer einander angenähert sind, bewegbar ist, wobei das zweite Brühkammerelement (13) ein in Richtung des ersten Brühkammerelements (12) abstehendes Perforationsmittel (11) aufweist, welches beim Überführen der Getränkeherstellungsmaschine (10) von der Ladestellung in die Arbeitsstellung die Folie (108) am Kapselboden (3) zur Erzeugung eines Getränkeauslaufs durchsticht.

13. System nach Anspruch 12, wobei das erste Brühkammerelement (12) eine Mehrzahl von in Richtung des zweiten Brühkammerelements (13) abstehende weitere Perforationsmittel (14) aufweist, welche beim Überführen der Getränkeherstellungsmaschine (10) von der Ladestellung in die Arbeitsstellung die Membran (6) zur Bildung von Einlassöffnungen durchstechen.

14. Verfahren zur Herstellung eines Getränks mit einem System nach einem der Ansprüche 12 oder 13, wobei in einem ersten Verfahrensschritt die Getränkeherstellungsmaschine (10) in der Ladestellung bereitgestellt wird, wobei in einem zweiten Verfahrensschritt die Portionskapsel (1) der Getränkeherstellungsmaschine (10) zugeführt wird, wobei in einem dritten Verfahrensschritt die Getränkeherstellungsmaschine (10) von der Ladestellung in die Arbeitsstellung überführt wird, wodurch das Perforationsmittel (11) die Folie (108) durchsticht, und wobei in einem vierten Verfahrensschritt der Portionskapsel Brühwasser zwangszugeführt wird.

## Claims

1. A portion capsule (1) for producing a beverage, having a substantially frustaconical or cylindrical capsule base body (2), which has a cavity (100) for receiving a raw beverage material (101), and a membrane (6) closing the cavity (100), wherein the capsule base body (2) has a capsule base (3), wherein the capsule base (3) has an output opening (107) which is sealed with a pierceable film (108), and wherein the portion capsule (1) is designed to be filter-free, **characterized in that** the film (108) has a tensile strength of less than 80 N/mm² and comprises an extension of between 1 and 30 percent.

2. The portion capsule (1) as claimed in claim 1, wherein the film (108) has a tensile strength of less than 75 N/mm² and preferably of less than 70 N/mm².

3. The portion capsule (1) as claimed in either of the preceding claims, wherein the film (108) comprises a tensile strength of between 20 and 70 N/mm².

4. The portion capsule (1) as claimed in one of the preceding claims, wherein the film (108) comprises an extension of between 2 and 20 percent and preferably of between 5 and 15 percent.

5. The portion capsule (1) as claimed in one of the preceding claims, wherein the film (108) has a material thickness of between 10 and 100 micrometers, preferably of between 20 and 70 micrometers and particularly preferably of between 40 and 60 micrometers.

6. The portion capsule (1) as claimed in one of the preceding claims, wherein the film (108) comprises a composite film composed of aluminum and plastic, in particular a PET/aluminum/PP95 composite film or a PET/aluminum/PP100 composite film.

7. The portion capsule (1) as claimed in one of the preceding claims, wherein the output opening (107) is of substantially circular design, and the diameter of the output opening (107) is between 10 and 60 percent, preferably between 20 and 50 percent and particularly preferably between 30 to 40 percent of the diameter of the capsule base (5).

8. The portion capsule (1) as claimed in one of the preceding claims, wherein the output opening (107) is of substantially circular design and has a diameter of greater than 8 millimeters and preferably greater than 10 millimeters.

9. The portion capsule (1) as claimed in claim 8, wherein the diameter of the output opening (107) is smaller than 20 millimeters and preferably smaller than 14 millimeters.

10. The portion capsule (1) as claimed in one of the preceding claims, wherein the diameter of the capsule base (5) comprises 25 to 35 millimeters, preferably 28 to 32 millimeters and particularly preferably substantially 30 millimeters.

11. The portion capsule (1) as claimed in one of the preceding claims, wherein the raw beverage material (101) rests directly on the capsule base (3).

12. A system having a beverage production machine (10) and a portion capsule (1) as claimed in one of the preceding claims, wherein the beverage production machine (10) has a first and a second brewing chamber element (12, 13), wherein the first and/or the second brewing chamber element (12, 13) is movable between a loading position, in which the first and the second brewing chamber element (12, 13) are spaced apart from each other for the introduction of the portion capsule (1) into the beverage production machine (10), and a working position, in which the first and the second brewing chamber element (12, 13) are brought close to each other in order to form a substantially closed brewing chamber, wherein the second brewing chamber element (13) has a perforation means (11) which protrudes in the direction of the first brewing chamber element (12) and, when the beverage production machine (10) is transferred from the loading position into the working position, pierces the film (108) on the capsule base (3) in order to produce a beverage outlet.

13. The system as claimed in claim 12, wherein the first brewing chamber element (12) has a plurality of further perforation means (14) which protrude in the direction of the second brewing chamber element (13) and, when the beverage production machine (10) is transferred from the loading position into the working position, pierce the membrane (6) in order to form inlet openings.

14. A method for producing a beverage with a system as claimed in either of claims 12 and 13, wherein, in a first method step, the beverage production machine (10) is provided in the loading position, wherein, in a second method step, the portion capsule (1) is supplied to the beverage production machine (10), wherein, in a third method step, the beverage production machine (10) is transferred from the loading position into the working position, as a result of which the perforation means (11) pierces the film (108), and wherein, in a fourth method step, brewing water is forcibly supplied to the portion capsule.

## Revendications

1. Capsule-portion (1) pour la préparation d'une boisson, présentant un corps de base de capsule (2) essentiellement tronconique ou cylindrique, qui présente une cavité (100) pour recevoir une matière première de boisson (101), et une membrane (6) fermant la cavité (100), le corps de base de capsule (2) présentant un fond de capsule (3), le fond de capsule (3) présentant une ouverture de sortie (107) qui est étanchéifiée avec une feuille perforable (108), et la capsule-portion (1) étant réalisée sans filtre, **caractérisée en ce que** la feuille (108) présente une résistance à la traction inférieure à 80 N/mm² et un allongement compris entre 1 et 30 pour cent.

2. Capsule-portion (1) selon la revendication 1, dans laquelle la feuille (108) présente une résistance à la traction inférieure à 75 N/mm² et de préférence inférieure à 70 N/mm².

3. Capsule-portion (1) selon l'une quelconque des revendications précédentes, dans laquelle la feuille (108) présente une résistance à la traction comprise entre 20 et 70 N/mm².

4. Capsule-portion (1) selon l'une quelconque des revendications précédentes, dans laquelle la feuille (108) présente un allongement compris entre 2 et 20 pour cent et de préférence compris entre 5 et 15 pour cent.

5. Capsule-portion (1) selon l'une quelconque des revendications précédentes, dans laquelle la feuille (108) présente une épaisseur de matériau comprise entre 10 et 100 micromètres, de préférence entre 20 et 70 micromètres et particulièrement préférablement entre 40 et 60 micromètres.

6. Capsule-portion (1) selon l'une quelconque des revendications précédentes, dans laquelle la feuille (108) comprend une feuille composite constituée d'aluminium et de plastique, en particulier une feuille composite de PET/aluminium/PP95 ou une feuille composite de PET/aluminium/PP100.

7. Capsule-portion (1) selon l'une quelconque des revendications précédentes, dans laquelle l'ouverture de sortie (107) est réalisée sous forme essentiellement ronde circulaire et le diamètre de l'ouverture de sortie (107) est compris entre 10 et 60 pour cent, de préférence entre 20 et 50 pour cent et particulièrement préférablement entre 30 et 40 pour cent du diamètre du fond de capsule (5).

8. Capsule-portion (1) selon l'une quelconque des revendications précédentes, dans laquelle l'ouverture de sortie (107) est réalisée sous forme essentiellement ronde circulaire et présente un diamètre supérieur à 8 millimètres et de préférence supérieur à 10 millimètres.

9. Capsule-portion (1) selon la revendication 8, dans laquelle le diamètre de l'ouverture de sortie (107) est inférieur à 20 millimètres et de préférence inférieur à 14 millimètres.

10. Capsule-portion (1) selon l'une quelconque des revendications précédentes, dans laquelle le diamètre du fond de capsule (5) vaut 25 à 35 millimètres, de préférence 28 à 32 millimètres et particulièrement préférablement vaut essentiellement 30 millimètres.

11. Capsule-portion (1) selon l'une quelconque des revendications précédentes, dans laquelle la matière première de boisson (101) repose directement sur le fond de capsule (3).

12. Système présentant une machine de préparation de boissons (10) et une capsule-portion (1) selon l'une quelconque des revendications précédentes, la machine de préparation de boissons (10) présentant un premier et un deuxième élément de chambre d'infusion (12, 13), le premier et/ou le deuxième élément de chambre d'infusion (12, 13) pouvant être déplacés entre une position de chargement, dans laquelle le premier et le deuxième élément de chambre d'infusion (12, 13) sont espacés l'un de l'autre pour l'introduction de la capsule-portion (1) dans la machine de préparation de boissons (10), et une position de travail, dans laquelle le premier et le deuxième élément de chambre d'infusion (12, 13) sont rapprochés l'un de l'autre pour constituer une chambre d'infusion essentiellement fermée, le deuxième élément de chambre d'infusion (13) présentant un moyen de perforation (11) saillant dans la direction du premier élément de chambre d'infusion (12), lequel, lors du transfert de la machine de préparation de boissons (10) de la position de chargement à la position de travail, perce la feuille (108) au niveau du fond de capsule (3) pour créer une sortie pour la boisson.

13. Système selon la revendication 12, dans lequel le premier élément de chambre d'infusion (12) présente une pluralité de moyens de perforation supplémentaires (14) saillant dans la direction du deuxième élément de chambre d'infusion (13), lesquels percent la membrane (6) pour créer des ouvertures d'entrée lors du transfert de la machine de préparation de boissons (10) de la position de chargement à la position de travail.

14. Procédé de préparation d'une boisson avec un système selon l'une quelconque des revendications 12 et 13, dans lequel, dans une première étape de procédé, la machine de préparation de boissons (10) est fournie dans la position de chargement, dans une deuxième étape de procédé, la capsule-portion (1) est acheminée à la machine de préparation de boissons (10), dans une troisième étape de procédé, la machine de préparation de boissons (10) est transférée de la position de chargement à la position de travail de sorte que le moyen de perforation (11) perce la feuille (108), et dans une quatrième étape de procédé, de l'eau d'infusion est acheminée de force à la capsule-portion.
